# EUROPEAN PATENT APPLICATION

(11) **EP 4 723 261 A1**
(43) Date of publication of application: **08.04.2026**
(21) Application number: 24742291.8
(22) Date of filing: 22.05.2024
(51) Int. Cl.: H01M 10/04, B65H 3/00, B65H 5/08, B65H 31/38, H01M 50/204

(54) **ELECTRODE PLATE LOADING SYSTEM**

(30) Priority: 24.05.2023 CN 202310598381; 13.09.2023 CN 202311186314
(71) Applicant: CPS Technology Holdings LLC, New York, New York 10281 (US)
(72) Inventor: CHEN, Xuxiong, Shanghai 201203 (CN); TANG, Jiamin, Shanghai 201203 (CN); JIANG, Yongjie, Shanghai 201203 (CN); ZHU, Hongfei, Shanghai 201203 (CN)
(74) Representative: Meissner Bolte Partnerschaft mbB
(86) International application number: PCT/IB2024/054957
(87) International publication number: WO 2024/241228

(57) **Abstract**

The present disclosure provides an electrode plate loading system, including a negative electrode plate placement device, a positive electrode plate placement device, a negative electrode plate pickup device, a positive electrode plate pickup device, a negative electrode plate vibrating and separating device, a positive electrode plate vibrating and separating device, a negative electrode plate transport device, and a positive electrode plate transport device. The negative electrode plate pickup device converts horizontal placement of sets of negative electrode plates into vertical placement. The positive electrode plate pickup device converts horizontal placement of sets of positive electrode plates into vertical placement. The negative electrode plate vibrating and separating device separates each set of vertically placed negative electrode plates by means of vibration. The positive electrode plate vibrating and separating device separates each set of vertically placed positive electrode plates by means of vibration. The negative electrode plate transport device and the positive electrode plate transport device respectively transport the sets of vertically placed negative electrode plates and the sets of vertically placed positive electrode plates on the negative electrode plate vibrating and separating device and the positive electrode plate vibrating and separating device to the encapsulating machine. The electrode plate loading system has the advantages of converting the horizontal placement of negative electrode plates and positive electrode plates into vertical placement and conveying them to the encapsulating machine.

## Description

### TECHNICAL FIELD

The present disclosure relates to an electrode plate loading system, and in particular to an electrode plate loading system for conveying negative electrode plates and positive electrode plates to an encapsulating machine.

### BACKGROUND

During a battery production process, negative electrode plates and positive electrode plates need to be conveyed to an encapsulating machine and assembled into batteries in the encapsulating machine. Therefore, there is a need for an electrode plate loading system to convey the negative electrode plates and the positive electrode plates to the encapsulating machine.

### SUMMARY OF THE DISCLOSURE

The present disclosure provides an electrode plate loading system for conveying negative electrode plates and positive electrode plates to an encapsulating machine. The encapsulating machine is configured to assemble a battery. The electrode plate loading system includes a negative electrode plate placement device, a positive electrode plate placement device, a negative electrode plate pickup device, a positive electrode plate pickup device, a negative electrode plate vibrating and separating device, a positive electrode plate vibrating and separating device, a negative electrode plate transport device, and a positive electrode plate transport device. The negative electrode plate placement device is configured to place a plurality of stacked sets of horizontally placed negative electrode plates. The positive electrode plate placement device is configured to place a plurality of stacked sets of horizontally placed positive electrode plates. The negative electrode plate pickup device is configured to convert each set of horizontally placed negative electrode plates into a set of vertically placed negative electrode plates. The positive electrode plate pickup device is configured to convert each set of horizontally placed positive electrode plates into a set of vertically placed positive electrode plates. The negative electrode plate vibrating and separating device is configured to separate each set of vertically placed negative electrode plates by means of vibration. The positive electrode plate vibrating and separating device is configured to separate each set of vertically placed positive electrode plates by means of vibration. The negative electrode plate transport device is configured to transport each set of vertically placed negative electrode plates on the negative electrode plate vibrating and separating device to the encapsulating machine. The positive electrode plate transport device is configured to transport each set of vertically placed positive electrode plates on the positive electrode plate vibrating and separating device to the encapsulating machine.

According to the electrode plate loading system as described above, the negative electrode plate pickup device includes: a negative electrode plate vision system and a negative electrode plate vertically-turning device, the negative electrode plate vision system and the negative electrode plate vertically-turning device being configured to convert each set of horizontally placed negative electrode plates into a set of vertically placed negative electrode plates. The positive electrode plate pickup device includes: a positive electrode plate vision system and a positive electrode plate vertically-turning device, the positive electrode plate vision system and the positive electrode plate vertically-turning device being configured to convert each set of horizontally placed positive electrode plates into a set of vertically placed positive electrode plates.

According to the electrode plate loading system as described above, the negative electrode plate vision system is configured to capture an image of each set of horizontally placed negative electrode plates, and the negative electrode plate vertically-turning device is configured to rotate the set of horizontally placed negative electrode plates according to the image captured by the negative electrode plate vision system. The positive electrode plate vision system is configured to capture an image of each set of horizontally placed positive electrode plates, and the positive electrode plate vertically-turning device is configured to rotate the set of horizontally placed positive electrode plates according to the image captured by the positive electrode plate vision system.

The electrode plate loading system as described above further includes a negative electrode plate pushing device and a positive electrode plate pushing device. The negative electrode plate pushing device is configured to push each set of horizontally placed negative electrode plates to an edge of the negative electrode plate placement device, and to cause at least one edge of the set of horizontally placed negative electrode plates to extend beyond the edge of the negative electrode plate placement device. The positive electrode plate pushing device is configured to push each set of horizontally placed positive electrode plates to an edge of the positive electrode plate placement device, and to cause at least one edge of the set of horizontally placed positive electrode plates to extend beyond the edge of the positive electrode plate placement device.

According to the electrode plate loading system as described above, each of the negative electrode plate vertically-turning device and the positive electrode plate vertically-turning device includes a first vertically-turning device clamp plate and a second vertically-turning device clamp plate. The first vertically-turning device clamp plate and the second vertically-turning device clamp plate are movable relative to each other, so as to move close to or move away from each other.

According to the electrode plate loading system as described above, each of the negative electrode plate vibrating and separating device (112.1) and the positive electrode plate vibrating and separating device (112.2) includes a vibrating bottom plate (604), a first reciprocating member (611) and a second reciprocating member (612). The vibrating bottom plate (604) is configured to be capable of vibrating, and the first reciprocating member (611) and the second reciprocating member (612) are disposed on two opposite sides of the vibrating bottom plate (604) and are movable relative to the vibrating bottom plate (604).

The electrode plate loading system as described above further includes an encapsulating machine configured to form the battery by assembling the sets of vertically placed negative electrode plates and the sets of vertically placed positive electrode plates.

The electrode plate loading system as described above further includes a negative electrode plate loading device and a positive electrode plate loading device. The negative electrode plate loading device is configured to transport each set of vertically placed negative electrode plates from the negative electrode plate vibrating and separating device to the encapsulating machine. The positive electrode plate loading device is configured to transport each set of vertically placed positive electrode plates from the positive electrode plate vibrating and separating device to the encapsulating machine.

The electrode plate loading system as described above further includes a negative electrode plate temporary storage device and a positive electrode plate temporary storage device. The negative electrode plate temporary storage device is configured to store at least one of the sets of vertically placed negative electrode plates, wherein the negative electrode plate transport device is configured to be capable of placing the sets of vertically placed negative electrode plates leaving the negative electrode plate vibrating and separating device into the negative electrode plate temporary storage device, and to be capable of transporting the sets of vertically placed negative electrode plates from the negative electrode plate temporary storage device to the negative electrode plate loading device. The positive electrode plate temporary storage device is configured to store at least one of the sets of vertically placed positive electrode plates, wherein the positive electrode plate transport device is configured to be capable of placing the sets of vertically placed positive electrode plates leaving the positive electrode plate vibrating and separating device into the positive electrode plate temporary storage device, and to be capable of transporting the sets of vertically placed positive electrode plates from the positive electrode plate temporary storage device to the positive electrode plate loading device.

According to the electrode plate loading system as described above, each of the negative electrode plate transport device and the positive electrode plate transport device includes a first transport device clamp plate and a second transport device clamp plate, the first transport device clamp plate and the second transport device clamp plate being movable relative to each other, so as to move close to or move away from each other.

The electrode plate loading system of the present disclosure has the advantages of converting the horizontal placement of negative electrode plates and positive electrode plates into vertical placement thereof and conveying them to the encapsulating machine.

Other features, advantages and embodiments of the present disclosure may be elaborated or become apparent by considering the following specific embodiments, accompanying drawings and claims. Furthermore, it should be appreciated that the summary and the following specific embodiments are all exemplary, and are intended to provide a further explanation, but not to limit the scope of protection of the present disclosure. However, the specific embodiments and specific examples merely indicate preferred embodiments of the present disclosure. For those skilled in the art, various variations and modifications within the spirit and scope of the present disclosure will become apparent by the way of the specific embodiments.

### BRIEF DESCRIPTION OF THE DRAWINGS

The features and advantages of the present disclosure may be better understood by reading the following detailed description with reference to the accompanying drawings. In all the accompanying drawings, the same reference numerals represent the same parts, in the figures:
- Fig. 1A: is a flowchart of movement of negative electrode plates and positive electrode plates of an electrode plate loading system according to the present disclosure;
- Fig. 1B: is a perspective view of the electrode plate loading system according to the present disclosure;
- Fig. 2A: is a perspective view of a negative electrode plate placement device and a positive electrode plate placement device respectively disposed in two frame assemblies 201 according to the present disclosure;
- Fig. 2B: is a perspective view of a negative electrode plate placement device and a positive electrode plate placement device respectively disposed on a pedestal according to the present disclosure;
- Fig. 2C: is a schematic top view of sets of negative electrode plates and sets of positive electrode plates according to the present disclosure when disposed on a first layer of the negative electrode plates layerand a first layer of the positive electrode plateslayer, respectively;
- Fig. 3: is a perspective view of an electrode plate pushing device (i.e., a negative electrode plate pushing device and a positive electrode plate pushing device) according to the present disclosure;
- Fig. 4: is a perspective view showing the cooperation between a vertically-turning device (i.e., a negative electrode plate vertically-turning device and a positive electrode plate vertically-turning device) and the electrode plate pushing device (i.e., the negative electrode plate pushing device and the positive electrode plate pushing device) according to the present disclosure;
- Fig. 5: is a perspective view of the vertically-turning device (i.e., the negative electrode plate vertically-turning device and the positive electrode plate vertically-turning device) and a reject temporary storage device (i.e., a negative electrode plate reject temporary storage device and a positive electrode plate reject temporary storage device) according to the present disclosure;
- Figs. 6A-6B: are perspective views of a vibrating and separating device (i.e., a negative electrode plate vibrating and separating device and a positive electrode plate vibrating and separating device) according to the present disclosure from different perspectives;
- Fig. 7: is a perspective view of a transport device (i.e., a negative electrode plate transport device and a positive electrode plate transport device) according to the present disclosure; and
- Fig. 8: is a perspective view of the transport device (i.e., the negative electrode plate transport device and the positive electrode plate transport device), a temporary storage device (i.e., a negative electrode plate temporary storage device and a positive electrode plate temporary storage device), and a loading device (i.e., a negative electrode plate loading device and a positive electrode plate loading device) according to the present disclosure.

### DETAILED DESCRIPTION OF EMBODIMENTS

Various specific embodiments of the present disclosure are described below with reference to the accompanying drawings which constitute part of this description. It should be understood that the ordinal numbers such as "first" and "second" used in the present disclosure are merely used for distinguishing and identification, and do not have any other meanings. Unless otherwise specified, the ordinal numbers neither indicate a specific order, nor have a specific relevance. For example, the term "first vertically-turning device clamp plate" does not by itself imply the existence of a "second vertically-turning device clamp plate", nor does the term "second vertically-turning device clamp plate" by itself imply the existence of a "first vertically-turning device clamp plate".

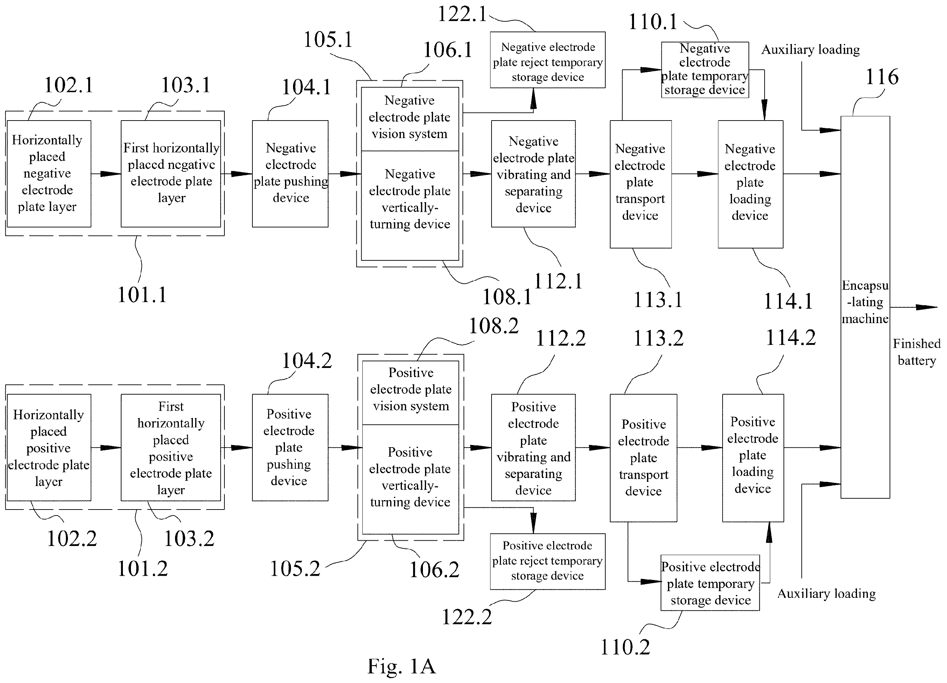

Fig. 1A is a flowchart of movement of negative electrode plates and positive electrode plates of an electrode plate loading system according to the present disclosure. As shown in Fig. 1A, the electrode plate loading system of the present disclosure is configured to convey negative electrode plates and positive electrode plates to an encapsulating machine 116. The encapsulating machine 116 assembles a battery using the negative electrode plates and the positive electrode plates and processes it into a product battery.

As shown in Fig. 1A, the electrode plate loading system includes a negative electrode plate placement device 101.1, a negative electrode plate pushing device 104.1, a negative electrode plate pickup device 105.1, a negative electrode plate reject temporary storage device 122.1, a negative electrode plate vibrating and separating device 112.1, a negative electrode plate transport device 113.1, a negative electrode plate temporary storage device 110.1, and a negative electrode plate loading device 114.1, so as to convey the negative electrode plates to the encapsulating machine 116. Specifically, the negative electrode plate placement device 101.1 includes a plurality of negative electrode plate layers 102.1. On each negative electrode plate layer 102.1, there is provided with a plurality of stacked sets of horizontally placed negative electrode plates. Each stacked set of horizontally placed negative electrode plates includes a plurality of horizontally placed negative electrode plates (that is, arranged in a horizontal direction). The plurality of horizontally placed negative electrode plates are stacked vertically (i.e., in a vertical direction) to form a stacked set of horizontally placed negative electrode plates. When a plurality of stacked sets of horizontally placed negative electrode plates are located on a first negative electrode plate layer 103.1, the negative electrode plate pushing device 104.1 pushes each of the plurality of stacked sets of horizontally placed negative electrode plates to an edge of the negative electrode plate placement device 101.1 in turn, and causes at least one edge of the pushed set of horizontally placed negative electrode plates to extend beyond the edge of the negative electrode plate placement device 101.1. The negative electrode plate pickup device 105.1 converts the set of horizontally placed negative electrode plates located at the edge of the negative electrode plate placement device 101.1 into a sets of vertically placed negative electrode plates, and transports the set of vertically placed negative electrode plates to the negative electrode plate vibrating and separating device 112.1. The negative electrode plate pickup device 105.1 includes a negative electrode plate vision system 106.1 and a negative electrode plate vertically-turning device 108.1. The negative electrode plate vision system 106.1 is configured to capture an image of each set of horizontally placed negative electrode plates, and to determine whether it is a qualified set of negative electrode plates. When the negative electrode plate vision system 106.1 determines that the set of horizontally placed negative electrode plates is an unqualified set of negative electrode plates, the negative electrode plate vertically-turning device 108.1 transports it to the negative electrode plate reject temporary storage device 122.1. The negative electrode plate reject temporary storage device 122.1 is configured to temporarily store the set of negative electrode plates that has been picked out as unqualified by the negative electrode plate vision system 106.1 of the negative electrode plate pickup device 105.1. When the negative electrode plate vision system 106.1 determines that the set of horizontally placed negative electrode plates is a qualified set of negative electrode plates, the negative electrode plate vertically-turning device 108.1 rotates the set of horizontally placed negative electrode plates according to the image captured by the negative electrode plate vision system 106.1, and transports the rotated set of horizontally placed negative electrode plates to the negative electrode plate vibrating and separating device 112.1. The negative electrode plate vibrating and separating device 112.1 separates each negative electrode plate of the set of vertically placed negative electrode plates by means of vibration, thereby preventing these negative electrode plates from sticking to each other. The negative electrode plate transport device 113.1 transports the set of vertically placed negative electrode plates to the negative electrode plate temporary storage device 110.1 or the negative electrode plate loading device 114.1 as needed, and can transport the set of vertically placed negative electrode plates from the negative electrode plate temporary storage device 110.1 to the negative electrode plate loading device 114.1 as needed. The negative electrode plate loading device 114.1 transports the set of vertically placed negative electrode plates to the encapsulating machine 116. In addition, the set of vertically placed negative electrode plates may be put into the encapsulating machine 116 by means of auxiliary loading (e.g., manually by a worker).

As shown in Fig. 1A, the electrode plate loading system further includes a positive electrode plate placement device 101.2, a positive electrode plate pushing device 104.2, a positive electrode plate pickup device 105.2, a positive electrode plate reject temporary storage device 122.2, a positive electrode plate vibrating and separating device 112.2, a positive electrode plate transport device 113.2, a positive electrode plate temporary storage device 110.2, and a positive electrode plate loading device 114.2, so as to convey the positive electrode plates to the encapsulating machine 116. Specifically, the positive electrode plate placement device 101.2 includes a plurality of positive electrode plate layers 102.2. On each positive electrode plate layer 102.2, there is provided with a plurality of stacked sets of horizontally placed positive electrode plates. Each stacked set of horizontally placed positive electrode plates includes a plurality of horizontally placed positive electrode plates. The plurality of horizontally placed positive electrode plates are stacked vertically to form a stacked set of horizontally placed positive electrode plates. When a plurality of stacked sets of horizontally placed positive electrode plates are located on a first positive electrode plate layer 103.2, the positive electrode plate pushing device 104.2 pushes each of the plurality of stacked sets of horizontally placed positive electrode plates to an edge of the positive electrode plate placement device 101.2 in turn, and causes at least one edge of the pushed set of horizontally placed positive electrode plates to extend beyond the edge of the positive electrode plate placement device 101.2. The positive electrode plate pickup device 105.2 converts the set of horizontally placed positive electrode plates located at the edge of the positive electrode plate placement device 101.2 into a sets of vertically placed positive electrode plates, and transports the set of vertically placed positive electrode plates to the positive electrode plate vibrating and separating device 112.2. The positive electrode plate pickup device 105.2 includes a positive electrode plate vision system 106.2 and a positive electrode plate vertically-turning device 108.2. The positive electrode plate vision system 106.2 is configured to capture an image of each set of horizontally placed positive electrode plates, and to determine whether it is a qualified set of positive electrode plates. When the positive electrode plate vision system 106.2 determines that the set of horizontally placed positive electrode plates is an unqualified set of positive electrode plates, the positive electrode plate vertically-turning device 108.2 transports it to the positive electrode plate reject temporary storage device 122.2. The positive electrode plate reject temporary storage device 122.2 is configured to temporarily store the set of positive electrode plates that has been picked out as unqualified by the positive electrode plate vision system 106.2 of the positive electrode plate pickup device 105.2. When the positive electrode plate vision system 106.2 determines that the set of horizontally placed positive electrode plates is a qualified set of positive electrode plates, the positive electrode plate vertically-turning device 108.2 rotates the set of horizontally placed positive electrode plates according to the image captured by the positive electrode plate vision system 106.2, and transports the rotated set of horizontally placed positive electrode plates to the positive electrode plate vibrating and separating device 112.2. The positive electrode plate vibrating and separating device 112.2 separates each positive electrode plate of the set of vertically placed positive electrode plates by means of vibration, thereby preventing these negative electrode plates from sticking to each other. The positive electrode plate transport device 113.2 transports the set of vertically placed positive electrode plates to the positive electrode plate temporary storage device 110.2 or the positive electrode plate loading device 114.2 as needed, and can transport the set of vertically placed positive electrode plates from the positive electrode plate temporary storage device 110.2 to the positive electrode plate loading device 114.2 as needed. The positive electrode plate loading device 114.2 transports the set of vertically placed positive electrode plates to the encapsulating machine 116. In addition, the set of vertically placed positive electrode plates may be put into the encapsulating machine 116 by means of auxiliary loading (e.g., manually by a worker).

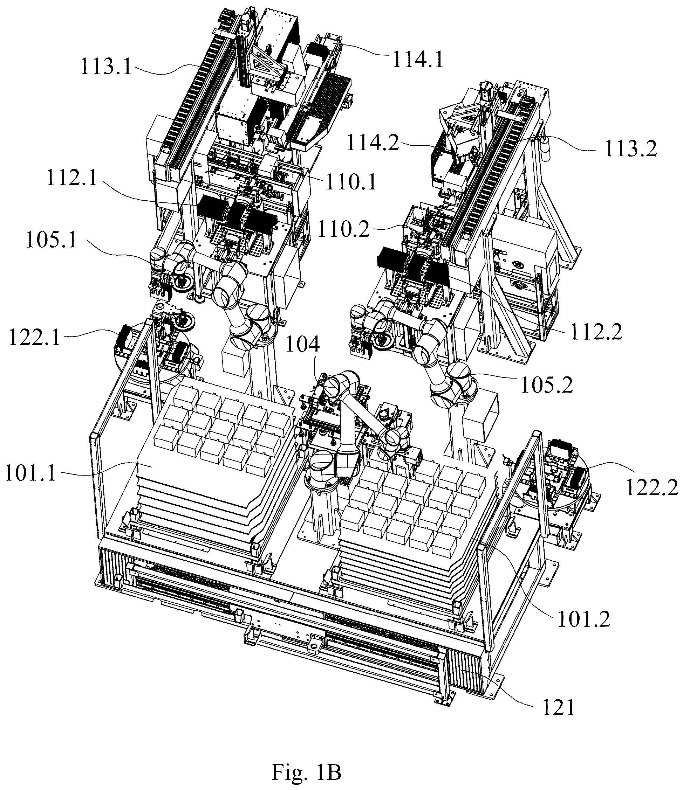

Fig. 1B is a perspective view of the electrode plate loading system according to the present disclosure, for showing the relative position of each device. As shown in Fig. 1B, the electrode plate loading system further includes a pedestal 121. The pedestal 121 is configured to support the negative electrode plate placement device 101.1, the positive electrode plate placement device 101.2 and a pushing device 104. Specifically, the negative electrode plate placement device 101.1 and the positive electrode plate placement device 101.2 are disposed on the pedestal 121. The negative electrode plate pushing device 104.1 and the positive electrode plate pushing device 104.2 are the same pushing device 104. In other words, the pushing device 104 can push each of the plurality of stacked sets of horizontally placed negative electrode plates to an edge of the negative electrode plate placement device 101.1 in turn, and cause at least one edge of the pushed set of horizontally placed negative electrode plates to extend beyond the edge of the negative electrode plate placement device 101.1; and can push each of the plurality of stacked sets of horizontally placed positive electrode plates to an edge of the positive electrode plate placement device 101.2 in turn, and cause at least one edge of the pushed set of horizontally placed positive electrode plates to extend beyond the edge of the positive electrode plate placement device 101.2. In the embodiment of the present disclosure, the pushing device 104 pushes the sets of negative electrode plates and the sets of positive electrode plates in turn.

As shown in Fig. 1B, the pushing device 104 is disposed on the pedestal 121 and between the negative electrode plate placement device 101.1 and the positive electrode plate placement device 101.2. The negative electrode plate pickup device 105.1 and the positive electrode plate pickup device 105.2 are arranged on a rear side of the pedestal 121, and are disposed at a position substantially corresponding to the negative electrode plate placement device 101.1 and the positive electrode plate placement device 101.2 respectively. The negative electrode plate reject temporary storage device 122.1 is located on a left side of the negative electrode plate pickup device 105.1, and the positive electrode plate reject temporary storage device 122.2 is located on a right side of the positive electrode plate pickup device 105.2.

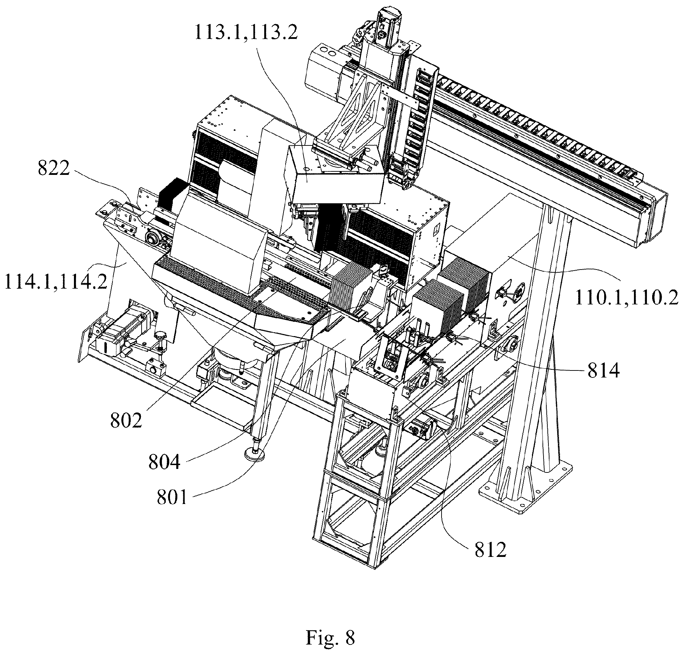

As shown in Fig. 1B, the negative electrode plate vibrating and separating device 112.1, the negative electrode plate temporary storage device 110.1 and the negative electrode plate loading device 114.1 are disposed behind the negative electrode plate pickup device 105.1 and the negative electrode plate reject temporary storage device 122.1, and are arranged substantially from front to rear. The negative electrode plate transport device 113.1 is disposed on a left side of each of the negative electrode plate vibrating and separating device 112.1, the negative electrode plate temporary storage device 110.1 and the negative electrode plate loading device 114.1. Similarly, the positive electrode plate vibrating and separating device 112.2, the positive electrode plate temporary storage device 110.2 and the positive electrode plate loading device 114.2 are disposed behind the positive electrode plate pickup device 105.2 and the positive electrode plate reject temporary storage device 122.2, and are arranged substantially from front to rear. The positive electrode plate transport device 113.2 is disposed on a right side of each of the positive electrode plate vibrating and separating device 112.2, the positive electrode plate temporary storage device 110.2 and the positive electrode plate loading device 114.2. Loading outlets 822 (see Fig. 8) of the negative electrode plate loading device 114.1 and the positive electrode plate loading device 114.2 are respectively aligned with a positive electrode inlet and a negative electrode inlet (not shown) of the encapsulating machine 116, such that the set of negative electrode plates on the negative electrode plate loading device 114.1 and the set of positive electrode plates on the positive electrode plate loading device 114.2 can enter the encapsulating machine 116.

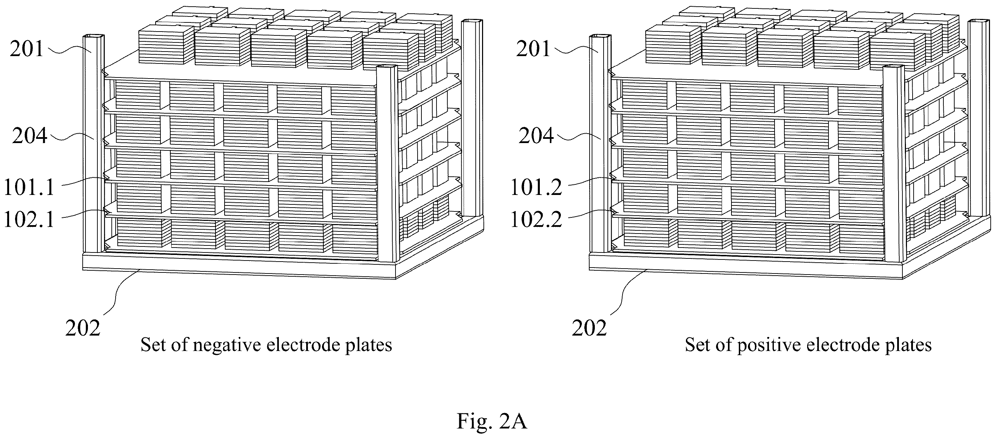

Fig. 2A is a perspective view of the negative electrode plate placement device 101.1 and the positive electrode plate placement device 101.2 respectively disposed in two frame assemblies 201 according to the present disclosure, for showing the specific structures of the negative electrode plate placement device 102.1, the positive electrode plate placement device 102.2 and the frame assemblies 201. As shown in Fig. 2A, each frame assembly 201 includes a frame bottom plate 202 and four frame posts 204. The four frame posts 204 are connected to the frame bottom plate 202. Specifically, the frame bottom plate 202 is substantially rectangular. The four frame posts 204 are substantially disposed at the corners of the frame bottom plate 202 and arranged to extend in the vertical direction. The frame bottom plate 202 and the four frame posts 204 enclose an accommodating space which has an upper opening. The negative electrode plate placement device 101.1 and the positive electrode plate placement device 101.2 can respectively support the sets of negative electrode plates and the sets of positive electrode plates and be accommodated in the accommodating space. A vehicle (not shown; for example, a forklift) can move the negative electrode plate placement device 101.1 supporting the sets of negative electrode plates out of or into the accommodating space through the upper opening, and can move the positive electrode plate placement device 101.2 supporting the sets of positive electrode plates out of or into the accommodating space through the upper opening. In the embodiment of the present disclosure, one frame assembly 201 is configured to accommodate electrode plates of the same polarity.

As shown in Fig. 2A, the negative electrode plate placement device 101.1 includes six negative electrode plate layers 102.1 arranged in the vertical direction. Each of the six negative electrode plate layers 102.1 supports a plurality of stacked sets of horizontally placed negative electrode plates. Each stacked set of horizontally placed negative electrode plates includes a plurality of horizontally placed negative electrode plates. The plurality of horizontally placed negative electrode plates are stacked vertically to form a stacked set of horizontally placed negative electrode plates. In this way, by placing a plurality of stacked sets of horizontally placed negative electrode plates on the negative electrode plate placement device 101.1, and by accommodating the negative electrode plate placement device 101.1 in a frame assembly 201, the plurality of stacked sets of horizontally placed negative electrode plates can be arranged in the frame assembly 201. A plurality of frame assemblies 201 can be closely arranged and stacked in a warehouse, thereby efficiently utilizing the storage space of the warehouse.

Similarly, the positive electrode plate placement device 101.2 includes six positive electrode plate layers 102.2 arranged in the vertical direction. Each of the six positive electrode plate layers 102.2 supports a plurality of stacked sets of horizontally placed positive electrode plates. Each stacked set of horizontally placed positive electrode plates includes a plurality of horizontally placed positive electrode plates. The plurality of horizontally placed positive electrode plates are stacked vertically to form a stacked set of horizontally placed positive electrode plates. In this way, by placing a plurality of stacked sets of horizontally placed positive electrode plates on the positive electrode plate placement device 101.2, and by accommodating the negative electrode plate placement device 101.1 in a frame assembly 201, the plurality of stacked sets of horizontally placed positive electrode plates can be arranged in the frame assembly 201. A plurality of frame assemblies 201 can be closely arranged and stacked in a warehouse, thereby efficiently utilizing the storage space of the warehouse.

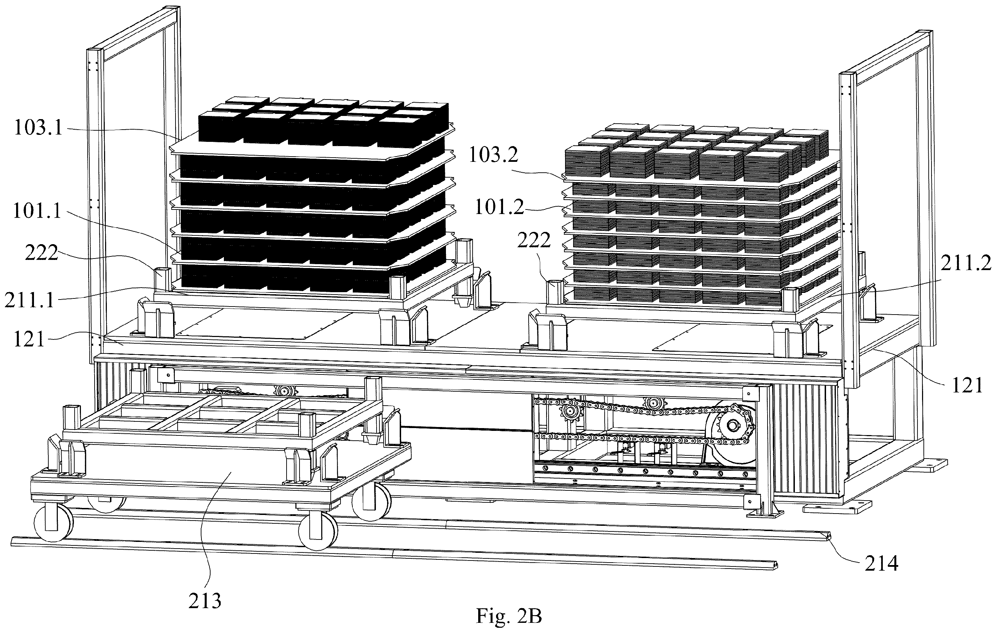

Fig. 2B is a perspective view of the negative electrode plate placement device 101.1 and the positive electrode plate placement device 101.2 respectively disposed on the pedestal 121 according to the present disclosure, for showing the positional relationship between the negative electrode plate placement device 101.1, the positive electrode plate placement device 101.2 and the pedestal 121. As shown in Fig. 2B, the pedestal 121 is provided with a negative electrode plate supporting platform 211.1 and a positive electrode plate supporting platform 211.2. The negative electrode plate supporting platform 211.1 and the positive electrode plate supporting platform 211.2 are respectively configured to support the negative electrode plate layer 102.1 with the negative electrode plates and the positive electrode plate layer 102.2 with the positive electrode plates. The structures of the negative electrode plate supporting platform 211.1 and the positive electrode plate supporting platform 211.2 are similar to the structure of the frame assembly 201 (refer to Fig. 2A), and will not be described again here. In the negative electrode plate placement device 101.1, the negative electrode plate layer 102.1 located at the top (that is, located at the first layer) is a first negative electrode plate layer 103.1. After all the sets of negative electrode plates on the first negative electrode plate layer 103.1 are removed, the first negative electrode plate layer 103.1 will be moved to a plate storage device 213. After the first negative electrode plate layer 103.1 is moved to the plate storage device 213, the negative electrode plate layer 102.1 currently at the top is a new first negative electrode plate layer 103.1.

Similarly, the positive electrode plate layer 102.2 located at the top (that is, located at the first layer) is a first positive electrode plate layer 103.2. After all the sets of positive electrode plates on the first positive electrode plate layer 103.2 are removed, the first positive electrode plate layer 103.2 will be moved to a plate storage device 213. After the first positive electrode plate layer 103.2 is moved to the plate storage device 213, the positive electrode plate layer 102.2 currently at the top is a new first positive electrode plate layer 103.1.

As shown in Fig. 2B, the plate storage device 213 is disposed on a front side of the pedestal 121. The plate storage device 213 is configured to support the negative electrode plate placement device 101.1 and the positive electrode plate placement device 101.2 without carrying the negative electrode plates and the positive electrode plates. More specifically, a pair of guide rails 214 extending in left and right directions are provided on the front side of the pedestal 121. The plate storage device 213 is configured to be movable along the pair of guide rails 214 in the left and right directions relative to the pedestal 121, so as to move close to the negative electrode plate supporting platform 211.1 and the positive electrode plate supporting platform 211.2.

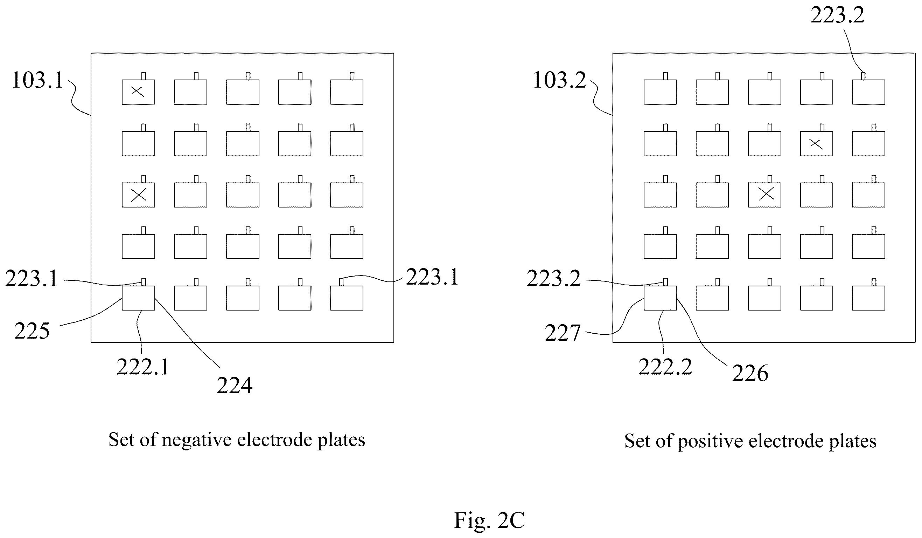

Fig. 2C is a schematic top view of sets of negative electrode plates and sets of positive electrode plates according to the present disclosure when located on a first negative electrode plate layer 103.1 and a first positive electrode plate layer 103.2, respectively, for showing the arrangement of the sets of negative electrode plates and the sets of positive electrode plates on the first negative electrode plate layer 103.1 and the first positive electrode plate layer 103.2, respectively. As shown in Fig. 2C, each first negative electrode plate layer 103.1 carries twenty-five stacked sets of horizontally placed negative electrode plates. There is a certain distance between two adjacent stacked sets of horizontally placed negative electrode plates. The negative electrode plates of each stacked set of horizontally placed negative electrode plates are arranged in the same manner. Specifically, each negative electrode plate includes a negative electrode plate body 222.1 and a negative electrode protrusion 223.1. The negative electrode plate body 222.1 is substantially rectangular. The negative electrode protrusion 223.1 is disposed on one of the long sides of the rectangle; and with respect to the two short sides of the rectangle, the negative electrode protrusion 223.1 is close to the first short side 224 and away from the second short side 225.

Similarly, each first positive electrode plate layer 103.2 carries twenty-five stacked sets of horizontally placed positive electrode plates. There is a certain distance between two adjacent stacked sets of horizontally placed positive electrode plates. The positive electrode plates of each stacked set of horizontally placed positive electrode plates are arranged in the same manner. Specifically, each positive electrode plate includes a positive electrode plate body 222.2 and a positive electrode protrusion 223.2. The positive electrode plate body 222.2 is substantially rectangular. The positive electrode protrusion 223.2 is disposed on one of the long sides of the rectangle; and with respect to the two short sides of the rectangle, the positive electrode protrusion 223.2 is close to the first short side 226 and away from the second short side 227.

It should be noted that two stacked sets of horizontally placed negative electrode plates on the same layer may be placed in different orientations. Specifically, each stacked set of horizontally placed negative electrode plates has opposite first and second surfaces formed by the negative electrode plate body 222.1. When each stacked set of horizontally placed negative electrode plates is placed on the layer, the first surface or the second surface will be in contact with the layer. Since the distance between the negative electrode protrusion 223.1 and the two short sides of the negative electrode plate is different, the position of the negative electrode protrusion 223.1 when the first surface is in contact with the layer is different from that when the second surface is in contact with the layer. By way of example, as shown by a plurality of sets of negative electrode plates on the left in Fig. 2C, the negative electrode protrusion 223.1 of a stacked set of horizontally placed negative electrode plates at the lower right corner of the layer is located on the left side of the stacked set of negative electrode plates, and the negative electrode protrusions 223.1 of the other stacked sets of negative electrode plates are located on the right side of the stacked sets of negative electrode plates.

Similarly, two stacked sets of horizontally placed positive electrode plates on the same layer may be placed in different orientations. Specifically, each stacked set of horizontally placed positive electrode plates has opposite first and second surfaces formed by the positive electrode plate body 222.2. When each stacked set of horizontally placed positive electrode plates is placed on the layer, the first surface or the second surface will be in contact with the layer. Since the distance between the positive electrode protrusion 223.2 and the two short sides of the positive electrode plate is different, the position of the positive electrode protrusion 223.2 when the first surface is in contact with the layer is different from that when the second surface is in contact with the layer. By way of example, as shown by a plurality of sets of positive electrode plates on the right in Fig. 2C, the positive electrode protrusion 223.2 of a stacked set of horizontally placed positive electrode plates at the upper right corner of the layer is located on the left side of the stacked set of positive electrode plates, and the positive electrode protrusions 223.2 of the other stacked sets of positive electrode plates are located on the right side of the stacked sets of positive electrode plates. In this embodiment, the location of an electrode protrusion (i.e., the negative electrode protrusion 223.1 and the positive electrode protrusion 223.2) on the right side of the stacked set of electrode plates is set as a predetermined position.

It should also be noted that when there is at least one unqualified electrode plate in each stacked set of negative electrode plates or positive electrode plates, the stacked set of negative electrode plates or positive electrode plates will be identified. For example, in the embodiment of the present disclosure, an upper surface of the set of electrode plates including at least one unqualified electrode plate is marked with an "X" by a colored pigment.

Referring to Figs. 1A-2C, in the present disclosure, the electrode plates (i.e., the negative electrode plates and the positive electrode plates) located on the electrode plate layer (i.e., the negative electrode plate layer 102.1 and the positive electrode plate layer 102.2) are placed in stacks, and the electrode plates in each stack of electrode plates are placed horizontally. This stacking method enables the electrode plates themselves to be placed in stacks on the electrode plate layer without the need for additional support components. In addition, during the transport of the electrode plates from the electrode plate layer to the encapsulating machine 116, the pickup device (i.e., the negative electrode plate pickup device 105.1 and the positive electrode plate pickup device 105.2) can directly grab the electrode plates without the need for removing the additional support components.

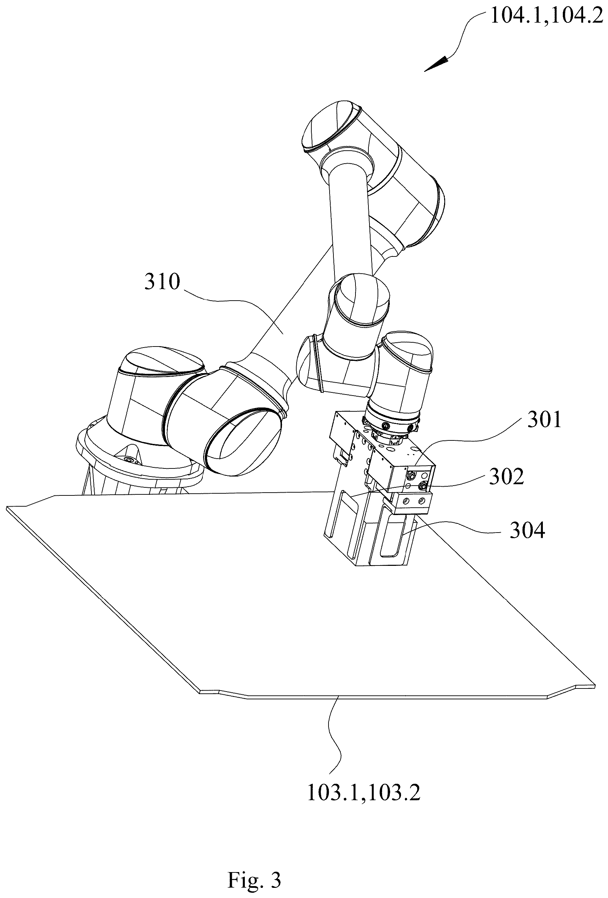

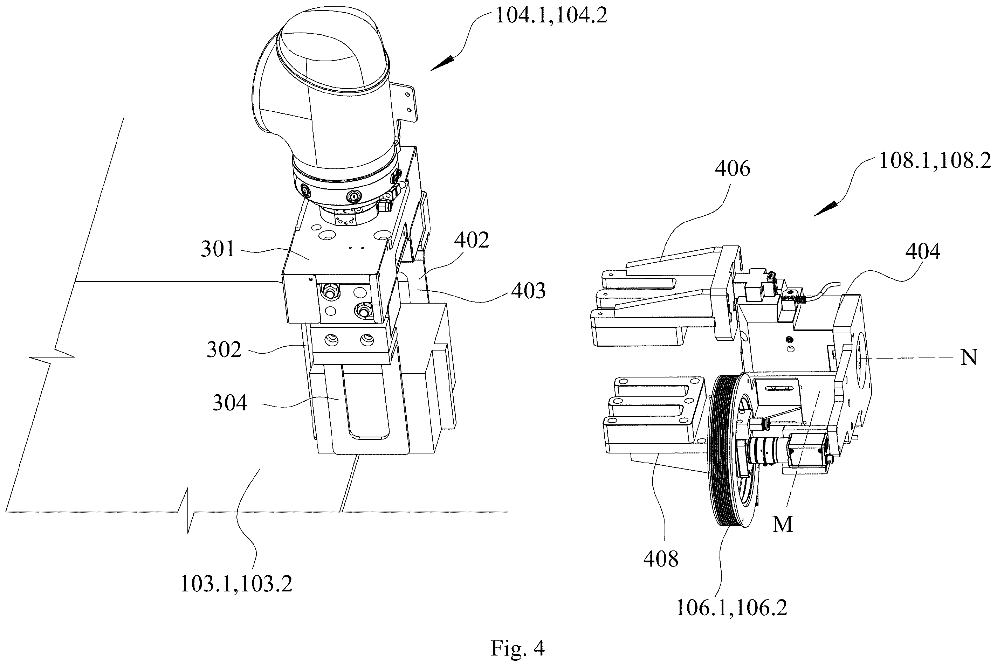

Fig. 3 is a perspective view of an electrode plate pushing device (i.e., a negative electrode plate pushing device 104.1 and a positive electrode plate pushing device 104.2) according to the present disclosure, for showing the specific structure of the electrode plate pushing device. As shown in Fig. 3, each of the negative electrode plate pushing device 104.1 and the positive electrode plate pushing device 104.2 includes a pushing device pedestal 301, a first pushing plate 302, a second pushing plate 304 and a third pushing plate 402 (see Fig. 4). The pushing device pedestal 301 is configured to have six degrees of freedom relative to the first layer (i.e., the first negative electrode plate layer 103.1 and the first positive electrode plate layer 103.2) (the six degrees of freedom including at least movements in the vertical direction, in the left and right directions, and in front and rear directions). In the embodiment of the present disclosure, the pushing device pedestal 301 is supported and driven by a pushing device driving mechanism 310. The pushing device driving mechanism 310 is a robotic arm. The first pushing plate 302, the second pushing plate 304 and the third pushing plate 402 are all disposed in the vertical direction, located below the pedestal 301, and fixedly connected to the pushing pedestal 301. The first pushing plate 302 extends in the front and rear directions, and the second pushing plate 304 and the third pushing plate 402 are disposed on two opposite sides of the first pushing plate 302 and extend in the left and right directions. In this way, the pushing pedestal 301, the first pushing plate 302, the second pushing plate 304 and the third pushing plate 402 form an accommodating space having a side opening (e.g., a right opening) and a lower opening. The accommodating space matches in shape and size with each stacked set of horizontally placed electrode plates (i.e., the set of positive electrode plates and the set of negative electrode plates), so that each stacked set of horizontally placed electrode plates can be accommodated in the accommodating space. In addition, when each stacked set of horizontally placed electrode plates is accommodated in the accommodating space, the electrode protrusions (i.e., the negative electrode protrusions 223.1 and the positive electrode protrusions 223.2, see Fig. 2C) orient towards the side opening, to avoid damaging the electrode protrusions.

As shown in Fig. 3, when it is necessary to move a stacked set of horizontally placed electrode plates, the pushing device driving mechanism 310 drives the pushing pedestal 301 to move to a position above the stacked set of horizontally placed electrode plates, and aligns the lower opening with the stacked set of horizontally placed electrode plates. The pushing device driving mechanism 310 then drives the pushing pedestal 301 to move downwardly until the stacked set of horizontally placed electrode plates is located in the accommodating space. The pushing device driving mechanism 310 then drives the first pushing plate 302 to push the stacked set of horizontally placed electrode plates to move toward an edge of the first layer (i.e., the first negative electrode plate layer 103.1 and the first positive electrode plate layer 103.2) adjacent to the side opening, until an edge (e.g., a right edge) of the set of electrode plates located on the side of the side opening extends beyond the edge of the first layer, so as to facilitate the vertically-turning device (i.e., the negative electrode plate vertically-turning device 108.1 and the positive electrode plate vertically-turning device 108.2) to grab the stacked set of horizontally placed electrode plates.

It should be noted that when a stacked set of horizontally placed electrode plates is located in the accommodating space, a lower edge of the first pushing plate 302 is close to a surface of the first layer, and there is an insertion space 403 (see Fig. 4) between an upper surface of the stacked set of horizontally placed electrode plates and a lower surface of the pushing pedestal 301 for receiving at least part of the vertically-turning device (i.e., the negative electrode plate vertically-turning device 108.1 and the positive electrode plate vertically-turning device 108.2).

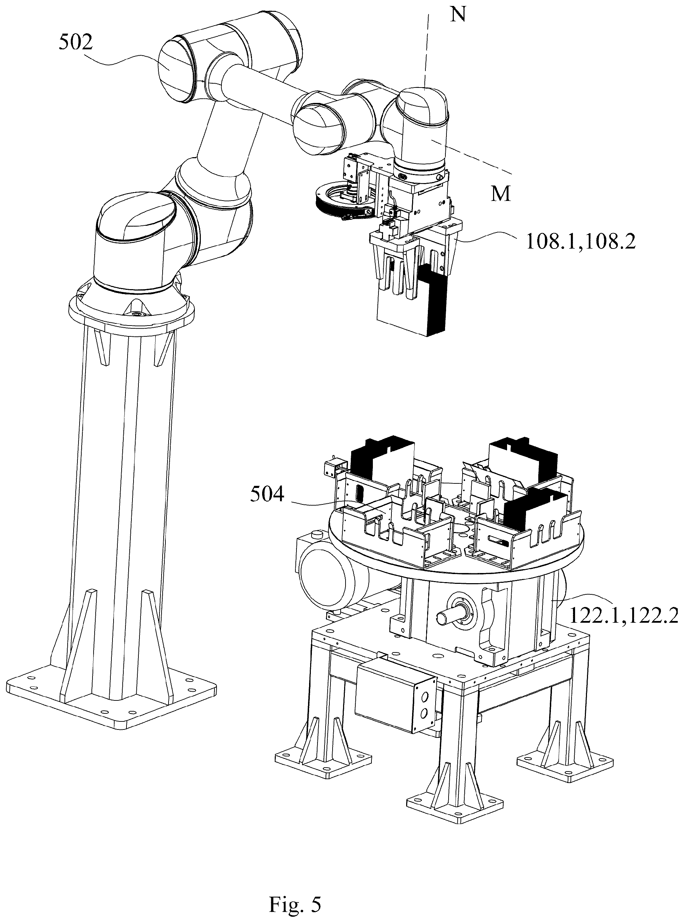

Fig. 4 is a perspective view of the vertically-turning device (i.e., the negative electrode plate vertically-turning device 108.1 and the positive electrode plate vertically-turning device 108.2) and the electrode plate pushing device (i.e., the negative electrode plate pushing device 104.1 and the positive electrode plate pushing device 104.2) according to the present disclosure, for showing the specific structure of the vertically-turning device and the cooperative relationship between the vertically-turning device and the electrode plate pushing device. As shown in Fig. 4, each of the negative electrode plate vertically-turning device 108.1 and the positive electrode plate vertically-turning device 108.2 includes a vertically-turning device pedestal 404, a first vertically-turning device clamp plate 406 and a second vertically-turning device clamp plate 408. The vertically-turning device pedestal 404 is configured to have six degrees of freedom relative to the first layer (i.e., the first negative electrode plate layer 103.1 and the first positive electrode plate layer 103.2) (the six degrees of freedom including at least movements in the vertical direction, in the left and right directions, and in the front and rear directions, rotation about an axis M defined in the front and rear directions, and rotation about an axis N defined in the left and right directions). In the embodiment of the present disclosure, the vertically-turning device pedestal 404 is supported and driven by a vertically-turning device driving mechanism 502 (see Fig. 5). The vertically-turning device driving mechanism 502 is a robotic arm. The first vertically-turning device clamp plate 406 and the second vertically-turning device clamp plate 408 are substantially in the shape of a flat plate and are disposed parallel to each other. The first vertically-turning device clamp plate 406 and the second vertically-turning device clamp plate 408 are disposed on the vertically-turning device pedestal 404, and are configured to be movable toward or away from each other relative to the vertically-turning device pedestal 404 so as to clamp or release the set of electrode plates. In the embodiment of the present disclosure, the first vertically-turning device clamp plate 406 and the second vertically-turning device clamp plate 408 may be driven by a vertically-turning device clamp plate driving mechanism (not shown). The vertically-turning device clamp plate driving mechanism is a motor.

As shown in Fig. 4, the vision system (i.e., the negative electrode plate vision system 106.1 and the positive electrode plate vision system 106.2) is disposed on the vertically-turning device pedestal 404, and is configured to capture an image of a stacked set of horizontally placed electrode plates to be clamped and/or a stacked set of horizontally placed electrode plates being clamped. The image can show an upper surface of an electrode plate at the top of the stacked set of horizontally placed electrode plates. The image can also show the relative positions of the electrode protrusion (i.e., the negative electrode protrusion 223.1 and the positive electrode protrusion 223.2) and the two short sides. In the embodiment of the present disclosure, the vision system is a camera.

As shown in Fig. 4, when an edge (e.g., a right edge) of a stacked set of horizontally placed electrode plates close to the side of the side opening extends beyond the edge of the first layer, the vertically-turning device driving mechanism 502 (see Fig. 5) drives the vertically-turning device pedestal 404 to move substantially to the same height as the stacked set of horizontally placed electrode plates, and the first vertically-turning device clamp plate 406 and the second vertically-turning device clamp plate 408 are respectively higher and lower than the stacked set of horizontally placed electrode plates. The first vertically-turning device clamp plate 406 and the second vertically-turning device clamp plate 408 then move laterally toward the stacked set of horizontally placed electrode plates, and at least a part of the first vertically-turning device clamp plate 406 extends into the insertion space 403. Next, the first vertically-turning device clamp plate 406 and the second vertically-turning device clamp plate 408 move toward each other, so as to clamp the stacked set of horizontally placed electrode plates. After the first vertically-turning device clamp plate 406 and the second vertically-turning device clamp plate 408 clamp the stacked set of horizontally placed electrode plates, the vision system captures a photograph of the upper surface of the electrode plate at the top of the stacked set of negative electrode plates or positive electrode plates and photographs of the relative positions of the electrode protrusion (i.e., the negative electrode protrusion 223.1 and the positive electrode protrusion 223.2) and the two short sides. In this case, if there is a pigment mark "X" on the upper surface of the electrode plate at the top of the stacked set of negative electrode plates or positive electrode plates, the vertically-turning device (i.e., the negative electrode plate vertically-turning device 108.1 and the positive electrode plate vertically-turning device 108.2) rotates the stacked set of horizontally placed electrode plates by 90° in a counterclockwise direction about the axis M, so that the stacked set of horizontally placed electrode plates is converted into a set of vertically placed negative electrode plates, and is then transported to the reject temporary storage device (i.e., the negative electrode plate reject temporary storage device 122.1 and the positive electrode plate reject temporary storage device 122.2, as shown in Fig. 5). If there is no pigment mark "X" on the upper surface of the electrode plate at the top of the stacked set of negative electrode plates or positive electrode plates, the electrode plate loading system will determine whether the electrode protrusion (i.e., the negative electrode protrusion 223.1 and the positive electrode protrusion 223.2) is in the predetermined position. If the electrode protrusion (i.e., the negative electrode protrusion 223.1 and the positive electrode protrusion 223.2) is in the predetermined position, the vertically-turning device rotates the stacked set of horizontally placed electrode plates by 90° in the counterclockwise direction about the axis M, so that the stacked set of horizontally placed electrode plates is converted into a set of vertically placed negative electrode plates, and is then transported to the vibrating and separating device (i.e., the negative electrode plate vibrating and separating device 112.1 and the positive electrode plate vibrating and separating device 112.2). If the electrode protrusion (i.e., the negative electrode protrusion 223.1 and the positive electrode protrusion 223.2) is not in the predetermined position, the vertically-turning device rotates the stacked set of horizontally placed electrode plates by 90° in the counterclockwise direction about the axis M and also rotates the stacked set of horizontally placed electrode plates by 180° about the axis N, and the stacked set of horizontally placed electrode plates is then transported to the vibrating and separating device.

Fig. 5 is a perspective view of the vertically-turning device (i.e., the negative electrode plate vertically-turning device 108.1 and the positive electrode plate vertically-turning device 108.2) and the reject temporary storage device (i.e., the negative electrode plate reject temporary storage device 122.1 and the positive electrode plate reject temporary storage device 122.2) according to the present disclosure. As shown in Fig. 5, the vertically-turning device pedestal 404 (see Fig. 4) of the vertically-turning device (i.e., the negative electrode plate vertically-turning device 108.1 and the positive electrode plate vertically-turning device 108.2) is driven by the vertically-turning device driving mechanism 502, and has six degrees of freedom with respect to the first layer (i.e., the first negative electrode plate layer 103.1 and the first positive electrode plate layer 103.2). Each of the negative electrode plate reject temporary storage device 122.1 and the positive electrode plate reject temporary storage device 122.2 is provided with at least one reject temporary storage cavity 504. Each reject temporary storage cavity 504 has an upper opening, and the size of the reject temporary storage cavity 504 corresponds to that of the set of vertically placed electrode plates, so that the vertically-turning device enables the set of vertically placed electrode plates in which an upper surface of an electrode plate has a pigment mark "X" to be placed into the reject temporary storage cavity 504 through the upper opening. The set of electrode plates placed in the reject temporary storage cavity 504 can be removed from the electrode plate loading system by employees.

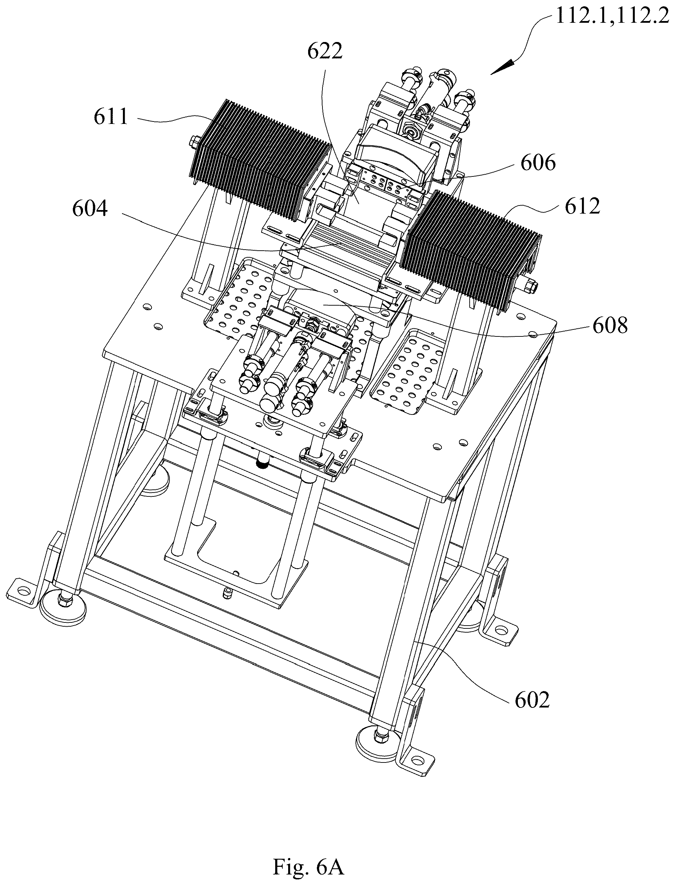

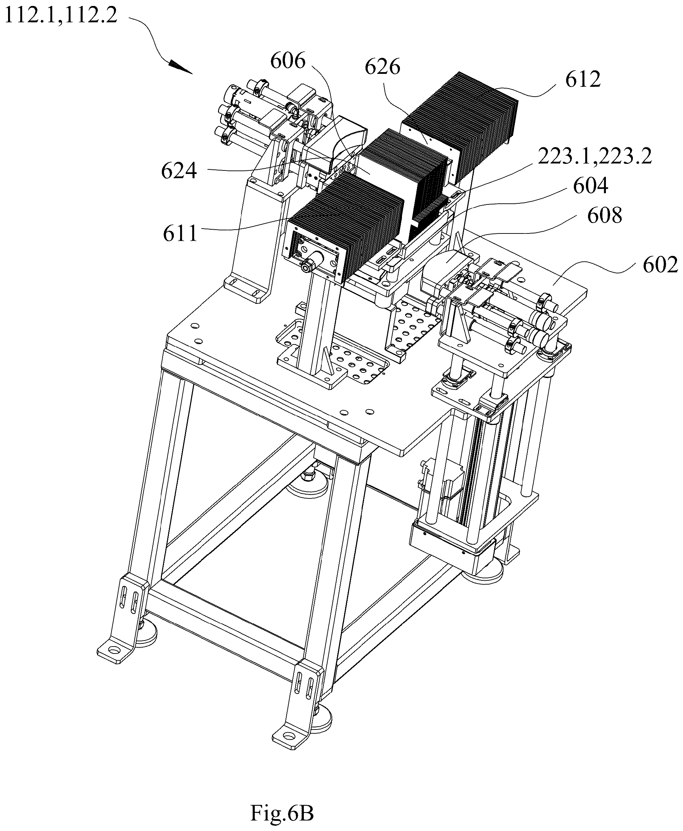

Fig. 6A is a perspective view of the vibrating and separating device (i.e., the negative electrode plate vibrating and separating device 112.1 and the positive electrode plate vibrating and separating device 112.2) according to the present disclosure from one perspective, and Fig. 6B is a perspective view of the vibrating and separating device (i.e., the negative electrode plate vibrating and separating device 112.1 and the positive electrode plate vibrating and separating device 112.2) according to the present disclosure from another perspective, for showing the specific structure of the vibrating and separating device. As shown in Figs. 6A-6B, each of the negative electrode plate vibrating and separating device 112.1 and the positive electrode plate vibrating and separating device 112.2 includes a vibrating and separating device pedestal 602, a vibrating bottom plate 604, a first vibration stopper 606, a second vibration stopper 608, a first reciprocating member 611 and a second reciprocating member 612. Specifically, the vibrating and separating device pedestal 602 is configured to support the vibrating bottom plate 604, the first vibration stopper 606, the second vibration stopper 608, the first reciprocating member 611 and the second reciprocating member 612. The vibrating bottom plate 604 is laterally disposed on the vibrating and separating device pedestal 602, and is configured to be capable of vibrating. In the embodiment of the present disclosure, the vibrating bottom plate 604 is connected to a vibrator (e.g., a vibration motor), so that high-frequency vibration can be achieved.

As shown in Figs. 6A-6B, the first vibration stopper 606 and the second vibration stopper 608 are respectively disposed on front and rear sides of the vibrating bottom plate 604. The first vibration stopper 606 is fixedly disposed on the vibrating and separating device pedestal 602. The second vibration stopper 608 can move relative to the vibrating bottom plate 604. The second vibration stopper 608 can move close to or move away from the first vibration stopper 606 in the front and rear directions, so as to cooperate with the first vibration stopper 606 to stop the set of vertically placed electrode plates in the front and rear directions, to hold the set of vertically placed electrode plates on the vibrating bottom plate 604.

As shown in Figs. 6A-6B, the first reciprocating member 611 and the second reciprocating member 612 are respectively disposed on left and right sides of the vibrating bottom plate 604 and can move in the left and right directions relative to the vibrating bottom plate 604. In the embodiment of the present disclosure, the first reciprocating member 611 and the second reciprocating member 612 may be driven by a reciprocating driving mechanism (not shown). The reciprocating driving mechanism is a motor.

In this way, the vibrating bottom plate 604, the first vibration stopper 606, the second vibration stopper 608, the first reciprocating member 611 and the second reciprocating member 612 enclose a vibration cavity 622 having an upper opening, for accommodating the set of vertically placed electrode plates. In addition, when the set of vertically placed electrode plates is accommodated in the vibration cavity 622, the electrode protrusion (i.e., the negative electrode protrusion 223.1 and the positive electrode protrusion 223.2, see Fig. 2C) orients towards the second vibration stopper 608 and is located above the second vibration stopper 608. In other words, when the second vibration stopper 608 moves toward the set of vertically placed electrode plates, the second vibration stopper 608 can abut against at least a part of the set of vertically placed electrode plates that is located below the electrode protrusion, to stop the set of electrode plates while preventing the electrode protrusion from damaging.

As shown in Figs. 6A-6B, when it is necessary to perform a vibrating and separating operation on the set of vertically placed electrode plates, the vertically-turning device (i.e., the negative electrode plate vertically-turning device 108.1 and the positive electrode plate vertically-turning device 108.2) places the set of vertically placed electrode plates into the vibration cavity 622 of the vibrating and separating device through the upper opening. The second vibration stopper 608 moves toward the first vibration stopper 606 until the set of vertically placed electrode plates is loosely clamped between the second vibration stopper 608 and the first vibration stopper 606. The vertically-turning device releases the set of vertically placed electrode plates. The first reciprocating member 611 and the second reciprocating member 612 orient toward the set of vertically placed electrode plates and loosely clamp the set of vertically placed electrode plates. At this time, the vibrating bottom plate 604 vibrates to separate each electrode plate of the set of electrode plates on the vibrating bottom plate 604. Finally, the first reciprocating member 611 and the second reciprocating member 612 can take turns to be pushed and move away from the set of vertically placed electrode plates, so that the electrode plates of the set of vertically placed electrode plates take turns to tilt to the left and right to facilitate better separation of the set of electrode plates.

It should be noted that the above expressions "the set of vertically placed electrode plates is loosely clamped between the second vibration stopper 608 and the first vibration stopper 606" and "the first reciprocating member 611 and the second reciprocating member 612 orient toward the set of vertically placed electrode plates and loosely clamp the set of vertically placed electrode plates" are intended that the distances between the second vibration stopper 608, the first vibration stopper 606, the first reciprocating member 611, the second reciprocating member 612 and the set of vertically placed electrode plates can provide a separation space between the electrode plates of the set of vertically placed electrode plates, and can prevent the set of vertically placed electrode plates from converting into a set of horizontally placed electrode plates.

It should also be noted that when the first reciprocating member 611 and the second reciprocating member 612 loosely clamp the set of vertically placed electrode plates, a first insertion space 624 (see Fig. 6B) is provided between the first reciprocating member 611 and the set of vertically placed electrode plates, and a second insertion space 626 (see Fig. 6B) is provided between the second reciprocating member 612 and the set of vertically placed electrode plates, respectively for receiving at least a part of the transport device (i.e., the negative electrode plate transport device 113.1 and the positive electrode plate transport device 113.2).

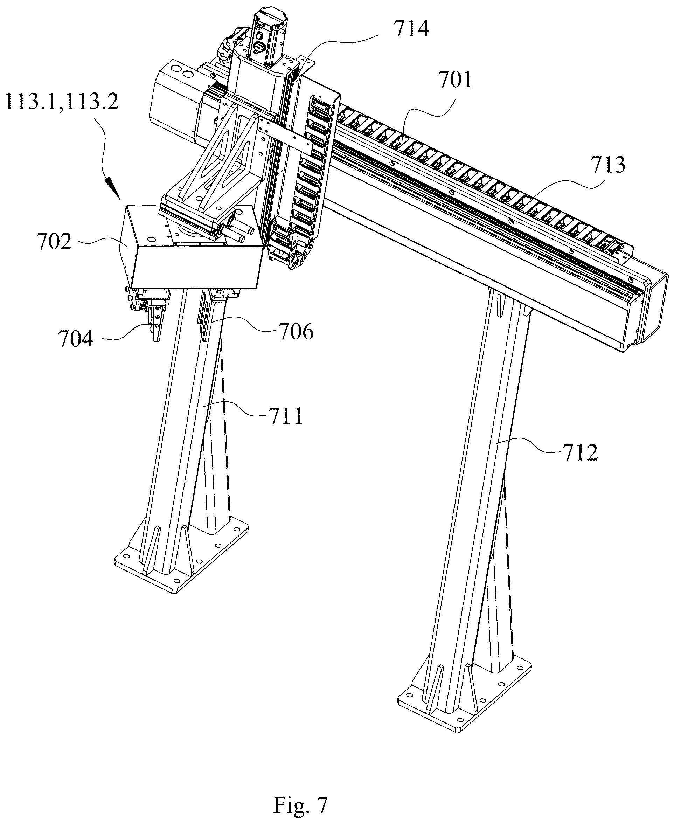

Fig. 7 is a perspective view of the transport device (i.e., the negative electrode plate transport device 113.1 and the positive electrode plate transport device 113.2) according to the present disclosure, for showing the specific structure of the transport device. As shown in Fig. 7, each of the negative electrode plate transport device 113.1 and the positive electrode plate transport device 113.2 includes a transport device pedestal 702, a first transport device clamp plate 704 and a second transport device clamp plate 706. The transport device pedestal 702 is configured to be movable in the vertical direction and in the left and right directions. In the embodiment of the present disclosure, the transport device pedestal 702 is supported by a transport frame 701. Specifically, the transport frame 701 includes a first leg 711, a second leg 712, a cross beam 713 and a vertical rod 714. The first leg 711 and the second leg 712 are arranged in the vertical direction. The cross beam 713 is disposed laterally and extends in the left and right directions. The cross beam 713 connects the first leg 711 to the second leg 712. The vertical rod 714 is arranged in the vertical direction, and is disposed on the cross beam 713. The vertical rod 714 is configured to be movable in the left and right directions relative to the cross beam 713. The transport device pedestal 702 is disposed on the vertical rod 714, and can move in the vertical direction relative to the vertical rod 714. In this way, the transport device pedestal 702 can move in the vertical direction and in the left and right directions. In the embodiment of the present disclosure, the vertical rod 714 and the transport device pedestal 702 can be driven by a transport device driving mechanism (not shown). The transport device driving mechanism is a motor.

As shown in Fig. 7, the first transport device clamp plate 704 and the second transport device clamp plate 706 are substantially in the shape of a flat plate. They are arranged in the vertical direction, and are disposed parallel to each other. The first transport device clamp plate 704 and the second transport device clamp plate 706 are disposed on the transport device pedestal 702, and can move toward or away from each other with respect to the transport device pedestal 702 so as to clamp or release the set of electrode plates. In the embodiment of the present disclosure, the first transport device clamp plate 704 and the second transport device clamp plate 706 are driven by a transport device clamp plate driving mechanism (not shown). The transport device clamp plate driving mechanism is a motor.

As shown in Figs. 6-7, after each electrode plate of the set of vertically placed electrode plates is separated, the transport device moves to a position above the set of vertically placed electrode plates on the vibrating and separating device, and causes the first transport device clamp plate 704 and the second transport device clamp plate 706 to move to the left and right sides of the set of vertically placed electrode plates. The first transport device clamp plate 704 and the second transport device clamp plate 706 then move toward the set of vertically placed electrode plates until at least a part of the first transport device clamp plate 704 and at least a part of the second transport device clamp plate 706 are respectively inserted into the first insertion space 624 and the second insertion space 626 (see Fig. 6B). The first transport device clamp plate 704 and the second transport device clamp plate 706 then move toward each other, so as to clamp the set of vertically placed electrode plates. Finally, the transport device may transport the set of vertically placed electrode plates to the temporary storage device (i.e., the negative electrode plate temporary storage device 110.1 and the positive electrode plate temporary storage device 110.2) or the loading device (i.e., the negative electrode plate loading device 114.1 and the positive electrode plate loading device 114.2).

Fig. 8 is a perspective view of the transport device (i.e., the negative electrode plate transport device 113.1 and the positive electrode plate transport device 113.2), the temporary storage device (i.e., the negative electrode plate temporary storage device 110.1 and the positive electrode plate temporary storage device 110.2), and the loading device (i.e., the negative electrode plate loading device 114.1 and the positive electrode plate loading device 114.2) according to the present disclosure, for showing the positional relationship of the above devices. As shown in Fig. 8, each of the negative electrode plate loading device 114.1 and the positive electrode plate loading device 114.2 includes a loading device pedestal 801 and a load pushing component 804. A loading channel 802 is provided on the loading device pedestal 801. One end (e.g., a left end) of the loading channel 802 is a loading outlet 822. The loading outlet 822 of the negative electrode plate loading device 114.1 is aligned with a negative electrode inlet (not shown) of the encapsulating machine 116, and the loading outlet 822 of the positive electrode plate loading device 114.2 is aligned with a positive electrode inlet (not shown) of the encapsulating machine 116, such that the set of negative electrode plates on the negative electrode plate loading device 114.1 and the set of positive electrode plates on the positive electrode plate loading device 114.2 can enter the encapsulating machine 116. The load pushing component 804 is disposed in the loading channel 802, and can move in the left and right directions relative to the loading device pedestal 801. When the transport device transports the set of vertically placed electrode plates to the loading channel 802 of the loading device and transports the set of vertically placed electrode plates to the left side of the load pushing component 804, the load pushing component 804 pushes the set of vertically placed electrode plates to the left to move toward the encapsulating machine until the set of vertically placed electrode plates is pushed into the encapsulating machine 116. The encapsulating machine 116 is configured to form the battery by assembling the negative electrode plates of the set of vertically placed negative electrode plates and the positive electrode plates of the set of vertically placed positive electrode plates.

Since the loading channel 802 can only accommodate a certain number of sets of vertically placed electrode plates, when the loading channel 802 cannot accommodate more sets of vertically placed electrode plates, the transport device transports the sets of vertically placed electrode plates to the temporary storage device (i.e., the negative electrode plate temporary storage device 110.1 and the positive electrode plate temporary storage device 110.2).

As shown in Fig. 8, each of the negative electrode plate temporary storage device 110.1 and the positive electrode plate temporary storage device 110.2 includes a temporary storage device pedestal 812. The temporary storage device pedestal 812 is provided with at least one temporary storage cavity 814 for accommodating the sets of vertically placed electrode plates. Each temporary storage cavity 814 has an upper opening, and the size of the temporary storage cavity 814 corresponds to that of the set of vertically placed electrode plates, so that the set of vertically placed electrode plates can be placed into the temporary storage cavity 814 through the upper opening.

When no more electrode plates can be accommodated within the loading channel 802, the transport device transports the sets of vertically placed electrode plates to the temporary storage device (i.e., the negative electrode plate temporary storage device 110.1 and the positive electrode plate temporary storage device 110.2). When electrode plates can be accommodate within the loading channel 802, the transport device may selectively transport a set of vertically placed electrode plates accommodated in the temporary storage device to the loading channel 802, or transport a set of vertically placed electrode plates accommodated in the vibrating and separating device to the loading channel 802.

The loading system provided by the present disclosure has the advantages of converting a plurality of stacked sets of horizontally placed negative and positive electrode plates into sets of vertically placed negative and positive electrode plates and conveying them to the encapsulating machine. In addition, the loading system of the present disclosure further includes a negative electrode plate vibrating and separating device and a positive electrode plate vibrating and separating device, which can separate the electrode plates of each stacked set of electrode plates to avoid sticking between the electrode plates to be transported to the encapsulating machine.

Although the present disclosure is described with reference to the examples of embodiments outlined above, various alternatives, modifications, variations, improvements and/or substantial equivalents, which are known or anticipated at present or to be anticipated before long, may be obvious to those of at least ordinary skill in the art. In addition, the technical effects and/or technical problems described in this specification are exemplary rather than limiting. Therefore, the disclosure in this specification may be used to solve other technical problems and have other technical effects and/or may solve other technical problems. Accordingly, the examples of the embodiments of the present disclosure as set forth above are intended to be illustrative rather than limiting. Various changes may be made without departing from the spirit or scope of the present disclosure. Therefore, the present disclosure is intended to embrace all known or earlier disclosed alternatives, modifications, variations, improvements and/or substantial equivalents.

## Claims

1. An electrode plate loading system for conveying negative electrode plates and positive electrode plates to an encapsulating machine (116), the encapsulating machine (116) being configured to assemble a battery, wherein the electrode plate loading system comprises:
- a negative electrode plate placement device (101.1), the negative electrode plate placement device (101.1) being configured to place a plurality of stacked sets of horizontally placed negative electrode plates;
- a positive electrode plate placement device (101.2), the positive electrode plate placement device (101.2) being configured to place a plurality of stacked sets of horizontally placed positive electrode plates;
- a negative electrode plate pickup device (105.1), the negative electrode plate pickup device (105.1) being configured to convert each set of horizontally placed negative electrode plates into a set of vertically placed negative electrode plates;
- a positive electrode plate pickup device (105.2), the positive electrode plate pickup device (105.2) being configured to convert each set of horizontally placed positive electrode plates into a set of vertically placed positive electrode plates;
- a negative electrode plate vibrating and separating device (112.1), the negative electrode plate vibrating and separating device (112.1) being configured to separate each set of vertically placed negative electrode plates by means of vibration;
- a positive electrode plate vibrating and separating device (112.2), the positive electrode plate vibrating and separating device (112.2) being configured to separate each set of vertically placed positive electrode plates by means of vibration;
- a negative electrode plate transport device (113.1), the negative electrode plate transport device (113.1) being configured to transport each set of vertically placed negative electrode plates on the negative electrode plate vibrating and separating device (112.1) to the encapsulating machine (116); and
- a positive electrode plate transport device (113.2), the positive electrode plate transport device (113.2) being configured to transport each set of vertically placed positive electrode plates on the positive electrode plate vibrating and separating device (112.2) to the encapsulating machine (116).

2. The electrode plate loading system of claim 1,
wherein the negative electrode plate pickup device (105.1) comprises: a negative electrode plate vision system (106.1) and a negative electrode plate vertically-turning device (108.1), the negative electrode plate vision system (106.1) and the negative electrode plate vertically-turning device (108.1) being configured to convert each set of horizontally placed negative electrode plates into a set of vertically placed negative electrode plates; and
wherein the positive electrode plate pickup device (105.2) comprises: a positive electrode plate vision system (106.2) and a positive electrode plate vertically-turning device (108.2), the positive electrode plate vision system (106.2) and the positive electrode plate vertically-turning device (108.2) being configured to convert each set of horizontally placed positive electrode plates into a set of vertically placed positive electrode plates.

3. The electrode plate loading system of claim 2,
wherein the negative electrode plate vision system (106.1) is configured to capture an image of each set of horizontally placed negative electrode plates, and the negative electrode plate vertically-turning device (108.1) is configured to rotate the set of horizontally placed negative electrode plates according to the image captured by the negative electrode plate vision system (106.1); and
wherein the positive electrode plate vision system (106.2) is configured to capture an image of each set of horizontally placed positive electrode plates, and the positive electrode plate vertically-turning device (108.2) is configured to rotate the set of horizontally placed positive electrode plates according to the image captured by the positive electrode plate vision system (106.2).

4. The electrode plate loading system of claim 2, further comprising:
- a negative electrode plate pushing device (104.1), the negative electrode plate pushing device (104.1) being configured to push each set of horizontally placed negative electrode plates to an edge of the negative electrode plate placement device (101.1), and to cause at least one edge of the set of horizontally placed negative electrode plates to extend beyond the edge of the negative electrode plate placement device (101.1); and
- a positive electrode plate pushing device (104.1), the positive electrode plate pushing device (104.1) being configured to push each set of horizontally placed positive electrode plates to an edge of the positive electrode plate placement device (101.2), and to cause at least one edge of the set of horizontally placed positive electrode plates to extend beyond the edge of the positive electrode plate placement device (101.2).

5. The electrode plate loading system of claim 2,
wherein each of the negative electrode plate vertically-turning device (108.1) and the positive electrode plate vertically-turning device (108.2) comprises a first vertically-turning device clamp plate (406) and a second vertically-turning device clamp plate (408);
wherein the first vertically-turning device clamp plate (406) and the second vertically-turning device clamp plate (408) are movable relative to each other, so as to move close to or move away from each other.

6. The electrode plate loading system of claim 1,
wherein each of the negative electrode plate vibrating and separating device (112.1) and the positive electrode plate vibrating and separating device (112.2) comprises a vibrating bottom plate (604), a first reciprocating member (611) and a second reciprocating member (612); wherein the vibrating bottom plate (604) is configured to be capable of vibrating, and the first reciprocating member (611) and the second reciprocating member (612) are disposed on two opposite sides of the vibrating bottom plate (604) and are movable relative to the vibrating bottom plate (604).

7. The electrode plate loading system of claim 1, further comprising:
- an encapsulating machine (116), the encapsulating machine (116) being configured to form the battery by assembling the sets of vertically placed negative electrode plates and the sets of vertically placed positive electrode plates.

8. The electrode plate loading system of claim 7, further comprising:
- a negative electrode plate loading device (114.1), the negative electrode plate loading device (114.1) being configured to transport each set of vertically placed negative electrode plates from the negative electrode plate vibrating and separating device (112.1) to the encapsulating machine (116); and
- a positive electrode plate loading device (114.2), the positive electrode plate loading device (114.2) being configured to transport each set of vertically placed positive electrode plates from the positive electrode plate vibrating and separating device (112.2) to the encapsulating machine (116).

9. The electrode plate loading system of claim 8, further comprising:
- a negative electrode plate temporary storage device (110.1), the negative electrode plate temporary storage device (110.1) being configured to store at least one of the sets of vertically placed negative electrode plates, and the negative electrode plate transport device (113.1) being configured to be capable of placing the sets of vertically placed negative electrode plates leaving the negative electrode plate vibrating and separating device (112.1) into the negative electrode plate temporary storage device (110.1), and to be capable of transporting the sets of vertically placed negative electrode plates from the negative electrode plate temporary storage device (110.1) to the negative electrode plate loading device (114.1); and
- a positive electrode plate temporary storage device (110.2), the positive electrode plate temporary storage device (110.2) being configured to store at least one of the sets of vertically placed positive electrode plates, and the positive electrode plate transport device (113.2) being configured to be capable of placing the sets of vertically placed positive electrode plates leaving the positive electrode plate vibrating and separating device (112.2) into the positive electrode plate temporary storage device (110.2), and to be capable of transporting the sets of vertically placed positive electrode plates from the positive electrode plate temporary storage device (110.2) to the positive electrode plate loading device (114.2).

10. The electrode plate loading system of claim 1,
wherein each of the negative electrode plate transport device (113.1) and the positive electrode plate transport device (113.2) comprises a first transport device clamp plate (704) and a second transport device clamp plate (706), the first transport device clamp plate (704) and the second transport device clamp plate (706) being movable relative to each other, so as to move close to or move away from each other.
